# EUROPEAN PATENT APPLICATION

(11) **EP 2 450 777 A2**
(43) Date of publication of application: **09.05.2012**
(21) Application number: 11187541.5
(22) Date of filing: 02.11.2011
(51) Int. Cl.: G06F 3/033, H01H 25/00

(54) **Multi-direction input device**

(30) Priority: 09.11.2010 KR 20100110986
(71) Applicant: Innochips Technology Co., Ltd., Gyeonggi-do 425-090 (KR)
(72) Inventor: Park, In-Kil, 446-788 Gyeonggi-Do (KR); Kim, Dae Kyum, 405-740 Incheon (KR); Kim, Young Sul, 403-090 Incheon (KR)
(74) Representative: Michalski Hüttermann & Partner

(57) **Abstract**

Provided is multi-direction input device. The multi-direction input device includes a magnet part, a manipulation member configured to receive the magnet part, the manipulation member being moved in multi-directions by user's manipulation, and a spring configured to surround at least one side of the manipulation member, the spring allowing the manipulation member to return to an original position by elasticity. At least one portion of the manipulation member is formed of a magnetic field blocking material.

## Description

### CROSS-REFERENCE TO RELATED APPLICATION

This application claims priority to Korean Patent Application No. 10-2010-0110986 filed on November 9, 2010 and all the benefits accruing therefrom under 35 U.S.C. §119, the contents of which are incorporated by reference in their entirety.

### BACKGROUND

The present disclosure relates to an input device, and more particularly, to a multi-direction input device capable of being applied to various electronics including portable terminals.

Recently, electronics is being multi-functioned and miniaturized more and more. For example, mobile phones are being miniaturized in size while providing various services such as DMD reception, digital camera functions, data transmission/reception, MP3 player functions, internet communication, etc. A graphic user interface (GUI) using a point may be used to easily manipulate the electronics. Here, to control the movement of the point, a multi-direction input device in which various multi-inputs are allowable is required.

Recently, multi-direction input devices in which a variation of a magnetic field due to movement of a magnet is detected using a sensor to control the movement of the point on a screen are being used. Here, the sensor is mounted on a board, and the magnet returns to its original position using a silicon rubber after the magnet is moved in multi-directions. That is, the magnet is moved together with the silicon rubber by the user's manipulation. Thus, the sensor detects the movement of the magnet to display the movement of the point on the screen. Thereafter, when the user's manipulation is completed, the magnet may return to its original position by the elasticity of the silicon rubber. However, the silicon rubber may be easily damaged due to friction with the board, and thus the silicon rubber may be reduced in elasticity. As a result, there is a limitation that the magnet does not quickly return to its original position.

As the more the electronics is thin in thickness, the more the multi-direction input device is thin in thickness. However, when the multi-direction input device has a thin thickness, a structure disposed above the magnet is thin in thickness. Thus, a magnetic field generated from the magnet may be emitted to the outside. If credit cards are exposed to the magnetic field emitted from the multi-direction input device, magnetic force lines formed within the credit cards may be damaged. Also, fine iron powder may be attracted into the multi-direction input device due to the magnetic field. Thus, the fine iron powder may have a bad influence on an operation of the multi-direction input device.

### SUMMARY

The present disclosure provides a multi-direction input device in which a magnet quickly returns to its original position and a magnetic field of the magnet is not emitted to the outside.

The present disclosure also provides a multi-direction input device in which a manipulation member receiving at least one portion of a magnet part is formed of a material having superior magnetic permeability and a material having elasticity is spirally wound to surround the manipulation member to manufacture a hinge part to prevent a magnetic field of the magnet from being emitted to the outside and allow the manipulation member to quickly return to its original position by an elastic restoring force of the hinge part.

In accordance with an exemplary embodiment, a multi-direction input device includes: a magnet part; a manipulation member configured to receive the magnet part, the manipulation member being moved in multi-directions by user's manipulation; and a hinge part configured to surround at least one side of the manipulation member, the hinge part allowing the manipulation member to return to an original position by elasticity, wherein at least one portion of the manipulation member is formed of a magnetic field blocking material.

The manipulation member may include: a cap part disposed in an inner space of the manipulation member to receive the magnet part; and a flat plate part extending outward from one area of the cap part.

A button part may be coupled to an upper end of the cap part above the flat plate part, and the hinge part may be coupled to a lower end of the cap part under the flat plate part.

In the manipulation member, the cap part may be formed of the magnetic field blocking material, the cap part and the flat plate part may be formed of the magnetic field blocking material, or the magnetic field blocking material may be disposed on the inside of the cap part contacting the magnet part.

The magnetic field blocking material may be formed of at least one of a metal, a ceramic, and a rubber which have magnetic permeability of approximately 200 or more.

The multi-direction input device may further include a fixing part extending from the lower end of the cap toward the flat plate part to prevent the hinge part from being separated.

The multi-direction input device may further include: a case part including upper and lower cases coupled to each other to receive the hinge part and the manipulation member therein, and a protrusion protruding upward from the outside of the lower case to fix the outside of the hinge part.

The multi-direction input device may further include an actuator and a dome switch disposed under the magnet part, wherein the actuator may contact a top surface of the dome switch to adhere to the dome switch through an adhesion unit.

The adhesion unit may include a Teflon tape configured to cover the actuator and the whole dome switch.

### BRIEF DESCRIPTION OF THE DRAWINGS

Exemplary embodiments can be understood in more detail from the following description taken in conjunction with the accompanying drawings, in which:

FIG. 1 is a view illustrating an outer appearance of a multi-direction input device in accordance with an exemplary embodiment;

FIG. 2 is an exploded perspective view of a multi-direction input device in accordance with an exemplary embodiment;

FIG. 3 is a sectional view of a multi-direction input device in accordance with an exemplary embodiment;

FIG. 4 is a schematic view for explaining states of a hinge part and a button part depending on an operation of a multi-direction input device in accordance with an exemplary embodiment; and

FIG. 5 is a sectional view of a multi-direction input device in accordance with another exemplary embodiment.

### DETAILED DESCRIPTION OF EMBODIMENTS

Hereinafter, specific embodiments will be described in detail with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. In the figures, like reference numerals refer to like elements throughout.

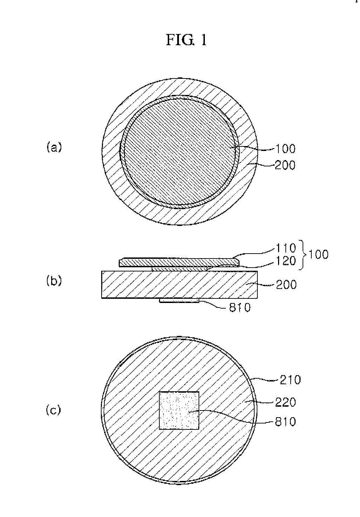

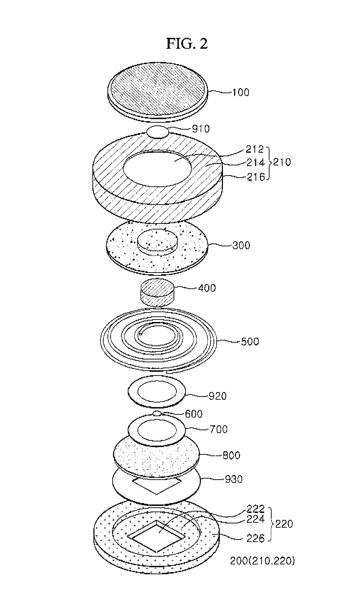

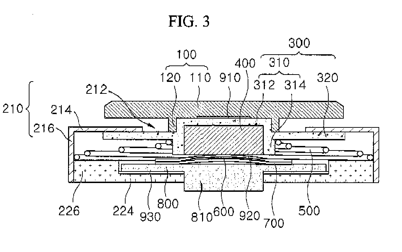

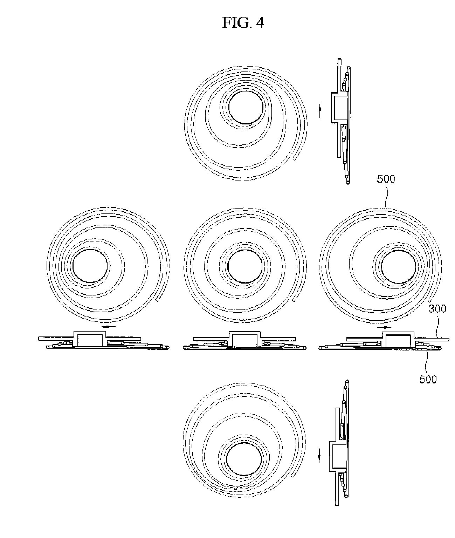

FIGS. 1 to 4 are views of a multi-direction input device in accordance with an exemplary embodiment. That is, FIG. 1 is a view illustrating an outer appearance of a multi-direction input device in accordance with an exemplary embodiment. FIG. 2 is an exploded perspective view of a multi-direction input device in accordance with an exemplary embodiment. FIG. 3 is a sectional view of a multi-direction input device in accordance with an exemplary embodiment. Here, FIG. 1A is a top view of the multi-direction input device, FIG. 1B is a side view of the multi-direction input device, and FIG. 1C is a bottom view of the multi-direction input device. FIG. 4 is a schematic view for explaining states of a hinge part and a button part depending on an operation of a multi-direction input device in accordance with an exemplary embodiment.

Referring to FIGS. 1 to 3, a multi-direction input device in accordance with an exemplary embodiment includes a magnet part 400, a manipulation member 300 formed of a magnetic field blocking material and moving the magnet part 400 through user's manipulation, a hinge part 500 partially surrounding the manipulation member 300 to restore the manipulation member 300 using elasticity, and a board 800 on which a sensor detecting a variation of magnetic field depending on movement of the magnet part 400 to generate a predetermined output signal is disposed. Also, the multi-direction input device may further include a button part 100 for transmitting a force generated by the user's manipulation into the manipulation member 300 and a case part 200 including upper and lower cases 210 and 220 for fixing the board 800 and the hinge part 500 to prevent the manipulation member 300 from being separated.

The button part 100 includes a plate 110 having an approximately circular shape with a predetermined thickness and a protrusion 120 protruding in an approximately circular shape and disposed on an under surface of the plate 110. A predetermined pattern may be disposed on a top surface of the plate 110 to prevent a finger from slipping. Also, as shown in drawings, the button part 100 may have a width greater than that of the protrusion 120. Alternatively, the button part 100 may have the same width as that of the protrusion 120. A lower portion of the button part 100 may be coupled to the manipulation member 300. Thus, the manipulation member 300 may be moved by the user's manipulation through the button part 100. That is, the manipulation member 300 includes a cap part 310 which protrudes from other surfaces on a central portion thereof. The protrusion 120 may surround the cap part 310 of the manipulation member 300. Here, an adhesion member 910 such as a double-sided tape may be disposed between a bottom surface of the plate 110 within the protrusion 120 and the cap part 310 of the manipulation member 300 to allow the button part 100 and the manipulation part 300 to fixedly adhere to each other. Here, the protrusion 120 and the cap part 310 may adhere to each other through various methods except the method using the adhesion member 910. Alternatively, a groove or projection may be provided in a predetermined area of the inside of the protrusion 120 and also a projection or groove may be provided in a predetermined area of the outside the cap part 310 to couple the projection and groove of the protrusion 120 to the groove and projection of the cap part 310. In addition, the protrusion 120 may have an inner diameter equal to an outer diameter of the cap part 310. Thus, the protrusion 120 may be inserted into and fixed to the cap part 310. Alternatively, the bottom surface of the protrusion 120 and a flat part 320 of the outside of the cap part 310 of the manipulation member 300 may adhere to each other by the adhesion member 910.

The case part 200 includes the upper and lower cases 210 and 220 which are coupled to each other. Thus, a predetermined space may be defined within the case part 200 to receive the manipulation member 300, the magnet part 400, the hinge part 500, and the board 800. An opening 212 having a predetermined size may be defined in a central portion of the upper case 210. Thus, the upper case 210 may have a circular cylindrical shape with a bottom surface opened. That is, the upper case 210 includes an opening 212 having an approximately circular shape and defined in an upper portion thereof, a top surface 214 having a predetermined width to surround the opening 212, and a side surface 216 extending downward from the top surface 214. The side surface 216 of the upper case 210 may have a thickness corresponding to that of the multi-direction input device. That is, the manipulation member 300, the magnet part 400, the hinge part 500, and the board 800 may be received between the upper case 210 and the lower case 220. Thus, since the upper case 210 should be manufactured at a thickness enough to receive the manipulation member 300, the magnet part 400, the hinge part 500, and the board 800, the upper case, i.e., the side surface 216 may be adjusted in thickness in consideration of thicknesses of the manipulation member 300, the magnet part 400, the hinge part 500, and the board 800.

The lower case 220 may have a plate shape having one area and the other area which have thicknesses different from each other. Also, the lower case may have a bottom surface with a planar shape. The lower case 220 includes a groove having an approximately square shape and defined in a central portion thereof, a first plane 224 disposed around the groove 222 and having a first thickness, and a second plane 226 disposed outside the first plane 224 and having a second thickness greater than the first thickness. That is, the lower case 220 has a groove 222 in a central portion thereof. Also, the lower case 220 has an approximately circular plate shape having an inner thickness less than an outer thickness. The board 800 may fixedly adhere to an inner plane of the lower case 220, i.e., the first plane 224 through an adhesion member 930 such as a double-sided tape. Also, a control part 810 disposed on a lower portion of the board 800 is inserted into the groove 222 of the lower case 220. Thus, the groove 222 of the lower case 220 may have various shapes according to a shape of the control part 810.

As described above, the outside of the lower case 220 and the inside of the upper case 210 are coupled to each other to couple the lower case 220 to the upper case 210. That is, an inner surface of the side surface 216 of the upper case 210 and an outer surface of the second plane 226 of the lower case 220 are coupled to each other. Here, an adhesion member (not shown) such as a double-sided tape may be disposed between the inner surface of the inside surface 216 of the upper case 210 and the outer surface of the second plane 226 of the lower case 220 to allow the upper and lower cases 210 and 220 to adhere to each other. In addition, the upper and lower cases 210 and 220 may be coupled and fixed to each other through various methods. For example, a groove or projection may be provided in/on at least one area of the outer surface of the second plane 226 of the lower case 220 and also a projection or groove may be provided on/in at least one area of the inner surface of the side surface 216 of the upper case 210 to couple the groove or projection of the lower case 220 to the projection or groove of the upper case 210, thereby coupling the upper and lower cases 210 and 220 to each other. Also, the side surface 216 of the upper case 210 has an inner diameter equal to an outer diameter of the outer surface of the lower case 220 to insert the lower case 220 into the upper case 210, thereby coupling the upper and lower cases 210 and 220 to each other. When the upper and lower cases 210 and 220 are coupled to each other, a predetermined space between the upper and lower cases 210 and 220, i.e., the second plane 226 of the lower case 220 and the top surface 214 of the upper case 210. The manipulation member 300 and the hinge part 500 are moved into the space.

The manipulation member 300 is disposed between the button part 100 and the magnet part 400. Also, the manipulation member 300 receives the magnet part 400 to move together with the magnet part 400 by the user's manipulation. For example, the manipulation member 300 includes the cap part 310 in which a central portion thereof is opened and an upper side and side surface thereof are shielded to provide a predetermined space and a flat plate part 320 having an approximately circular shape and extending to the outside of the cap part 310, e.g., the outside contacting a central area thereof. The magnet part 400 may be received into the cap part 310. Thus, the cap part 310 may be changed in shape according to a shape of the magnet part 400. For example, the cap part 310 may have an approximately cylindrical shape. The flat plate part 320 prevents the manipulation member 300 from being separated through the opening 212 of the upper case 210. Also, the cap part 310 may be divided into upper and lower ends 312 and 314 with respect to a center of the flat plate part 320. The upper end of the cap part 310 contacts the protrusion 120 of the button part 100, and the lower end of the cap part 310 contacts the hinge part 500. That is, the protrusion 120 of the button part 100 surrounds the upper end 312 of the cap part 310, and at least one portion of the hinge part 500 surrounds the lower end 314 of the cap part 310. Thus, the hinge part 500 is fixed to the lower end 314 of the cap part 310. Here, the hinge part 500 contacts the lower end 314 of the cap part 310 and the bottom surface of the flat plate part 320 to surround the lower end 314 of the cap part 310. That is, the contact area of the hinge part 500 may be adjusted to contact only the lower end 314 of the cap part 310 or to contact the lower end 314 of the cap part 310 and the bottom surface of the flat plate part 320 at the same time. The lower end 314 of the cap part 310 may have a width greater than that of the upper end 312 of the cap part 310. This is done because the lower end 314 of the cap part 310 may be adjusted in width according to an inner diameter of the hinge part 500 fixed thereto. The manipulation member 300 is moved into the space between the upper and lower cases 210 and 220 by the use's manipulation. Thus, the cap part 310 may have a diameter less than that of the opening 212 of the upper case 210, and the flat plate part 320 may have a diameter less than an inner diameter of the upper case 210. That is, the movement and rotation of the manipulation member 300 may be limited by the hinge part 500. However, since the cap part 310 and the flat plate part 320 are moved into the opening 212 and the inner space of the upper case 210, each of the cap part 310 and the flat plate part 320 should have a diameter less than those of the opening 212 and inner space of the upper case 210. Also, a ratio of the diameters of the cap part and the flat plate part 320 may be equal to that of the diameters of the opening 212 and the inner space of the upper case 210. Of cause, although the ratio of the diameters of the cap part 310 and the flat plate part 320 is different from those of the diameters of the opening 212 and the inner space of the upper case 210, the cap part 310 or the flat plate part 320 should not be limited in movement thereof. The manipulation member 300 may be formed of a magnetic filed blocking material to prevent a magnetic filed of the magnet part 400 from being emitted upward. That is, the cap part 310 may be formed of the magnetic field blocking material. Alternatively, the whole manipulation member 300 including the cap part 310 and the flat plate part 320 may be formed of the magnetic field blocking material. Alternatively, the magnetic field blocking material may be disposed inside the cap part 310. A material having magnetic permeability may be used as the magnetic field blocking material. For example, a metal, ceramic, or rubber which has magnetic permeability of approximately 200 or more may be used as the magnetic field blocking material. For example, an iron (Fe) having high magnetic permeability may be uses as the magnetic field blocking material. Alternatively, a metal ceramic rubber such as a stainless containing the iron (Fe) may be used as the magnetic field blocking material. As described above, at least one portion of the manipulation member 300 may be formed of a material having the high magnetic permeability to prevent the magnetic field of the magnet part 400 from being emitted to the outside without providing a manipulation member 300 having a thick thickness. Thus, a large amount of the magnetic field of the magnet part 400 may be emitted downward to transfer sufficient sensitivity into the sensor, thereby improve sensing efficiency.

At least one portion of the magnet part 400 may be received into the cap part 310 of the manipulation member 300. Also, a magnet which has a cylindrical shape and is vertically magnetized may be used as the magnet part 400. That is, the magnet part 400 may have a shape corresponding to that of the cap part 310 of the manipulation member 400. Also, at least one portion of the magnet part 400 may be received into the cap part 310. However, since at least the cap part 310 of the manipulation member 300 is formed of the magnetic field blocking material, the whole magnet part 400 may be received into the cap part 310 to completely block the magnetic field of the magnet part 400. Also, the magnet part 400 may have a diameter equal to an inner diameter of the cap part 310 to prevent the magnet part 40 from being shaken within the cap part 400. A single-surface multi-pole (e.g., two poles, four poles, or eight poles) magnetized or single-surface different-shape multi-poles magnetized magnet may be used as the magnet part 400. The magnet part 400 may have a square shape, an oval shape, or a polygonal shape. However, even though the magnet having various shapes is used, the magnet part 400 should have a diameter equal to an inner diameter of the cap part 310 of the manipulation member 300. The magnet part 400 may be moved together with the manipulation member 300 by the user's manipulation, and then the sensor disposed on the board may detect a variation of the magnetic field due to the movement of the magnet part 400 to detect a position of the magnet part 400. Also, a Teflon tape 920 and an actuator 600 may be disposed under the magnet part 400.

The hinge part 500 may have a spiral shape in which a portion thereof surrounds the lower end 314 of the cap part 310 of the manipulation member 300 and is wound with a plurality of patterns while rotating the outside of the lower end of the cap part 310. The plurality of patterns of the hinge part 500 may be different in distance as the patterns are repeated. For example, a width between the patterns may repeatedly become narrow and wide from the inner diameter of the hinge part 500. Also, the patterns of the hinge part 500 are gradually lowered downward as the patterns are repeated from the inner diameter to the outer diameter so that a position defining an inner diameter of the hinge part 500 is disposed above a position defining an outer diameter side. However, the inner and outer diameter sides of the hinge part 500 may have the same height as each other. The hinge part 500 disposed above a position defining the outer diameter thereof may have a central inner diameter equal to or less than the outer diameter of the lower end 314 of the cap part 310 to surround the lower end 314 of the cap part 310. Here, an adhesion unit may be provided between the hinge part 500 and the lower end 314 of the cap part 310 to allow the hinge part 500 and the lower end 314 of the cap part 310 to adhere to each other, thereby firmly fixing the hinge part 500 to the lower end 314 of the cap part 310. Also, when the central inner diameter of the hinge part 500 is less than the outer diameter of the lower end of the cap part 310, the hinge part 500 may be fixed to the lower end 314 of the cap part 310 using elasticity thereof. The outside of the hinge part 500 may contact between the inside of the side surface 216 of the upper case 210 and the second plane 226 of the lower case 220. That is, the hinge part 500 is spirally rotated from the lower end 314 of the cap part 310 to the outside. Thus, the outside of the hinge part 500 may contact between the inside of the side surface 216 of the upper case 210 and the second plane 226 of the lower case 220. A material having elasticity such as a metal may be spirally wound to manufacture the hinge part 500. As shown in FIG. 4, when the manipulation member 300 is moved, the patterns of the hinge part 500 are compressed in the movement direction of the manipulation member 300 and relaxed in a direction opposite to the movement direction of the manipulation member 300 to deform the hinge part 500. Here, since the hinge part 500 has elasticity expanding to the outside, the hinge part 500 disposed in the direction opposite to the movement direction of the manipulation member 300 may maintain the contact state without moving in the movement direction of the manipulation member 300. After the manipulation member 300 is moved, the patterns compressed by the elastic restoring force are relaxed into its original state to allow the manipulation member 300 to automatically return to an initial position. The hinge part 500 may have an elastic strain that can limit the movement of the manipulation member 300 within a preset range. Thus, the manipulation member 300 may receive the magnet part 400 and be moved in multi-directions such as left and right or up and down directions to automatically return to the initial position by the elastic restoring force of the hinge part 500. A fixing unit (not shown) may be disposed on at least one of the inside of the side surface 216 of the upper case 210 and the second plane 226 of the lower case 220 which contact the outside of the hinge part 500 to fix the outside of the hinge part 500.

The actuator 600 is disposed between the magnet part 400 and a dome switch 700. A Teflon tape 920 is disposed on the actuator 600. The Teflon tape 920 may cover the actuator 600 and the dome switch 700. The actuator 600 may provide a power of the user into the dome switch 700 when the user pushes the button part 100 to select a menu, i.e., performs a click operation. Thus, the dome switch electrically contacts the lower board 800. Also, the Teflon tape 920 adheres to the dome switch 700 with the actuator 600 therebetween to fix the actuator 600. The Teflon tape 920 may realize a smooth click operation to allow the user to feel manipulation sensibility. That is, when the actuator 600 adheres to the lower portion of the magnet part 400 to move together with the magnet part 400 and the manipulation member 300, it may be difficult to click the dome switch 700 using the actuator 600 in case where the movement distance of the manipulation member 300 is wide. However, when the actuator 600 adheres to the dome switch 700 using the Teflon tape 920, the actuator 600 may be disposed under the magnet part 400 to easily click the dome switch 700 using the actuator 600 even though the movement distance of the manipulation member 300 is wide. A wire pattern for applying a power or signal to the dome switch 700 and the actuator 600 is disposed on the lower board 800 contacting the actuator 600 and the dome switch 700.

The dome switch 700 is disposed on the board 800. The actuator 600 is disposed on the dome switch 700. The dome switch 700 has a dome shape which is spaced a predetermined distance from the board 800 at a central area of the board 800 and contacts the board 800 at an outer circumference region. The dome switch 700 generates an electrical signal for performing an operation selected according to a user's operation such as the click operation. That is, the dome switch 700 and the board 800 may contact each other to generate an electrical signal for performing an operation selected by the user. Here, various types of switches except the dome switch 700 may be used. For example, switches having click sensibility may be used. The dome switch 700 may be omitted as necessary.

The board 800 includes a sensor for detecting a variation of the magnetic field due to the movement of the magnet part 400. Also, various circuit patterns are disposed on the board 800. A printed circuit board may be used as the board 800. The board 800 may be variously changed in shape according to electronics to which the multi-direction input device is applied. The control part 810 may be disposed under the board 800. A plurality of sensors may be disposed within the control part 810. That is, the plurality of sensors and the control part 810 may be formed as a single chip. Alternatively, the sensor may be separately disposed outside a top surface of the board 800 by being separated from the control part 810. The sensor includes a magnetic sensor which detects a variation of a magnetic field due to the movement of the magnet part 400 in an X-axis direction to output an X-coordinate value and a magnetic sensor which detect a variation of a magnetic field due to the movement of the magnet part 400 in a Y-axis direction to output a Y-coordinate value. The control part 810 may amplify and synthesize the outputs of the sensor to detect and output a variation of a final magnetic filed. Here, the plurality of sensor disposed in the control part 810 may be symmetric to each other with respect to a central point of the magnet part 400. The sensor may include one of a hall element, a semiconductor magnetic reluctance element, a ferromagnetic magnetic reluctance element, and a giant magneto resistive (GMR) element. That is, the sensor may include an element which is varied in electrical characteristic according to a variation of the magnetic field.

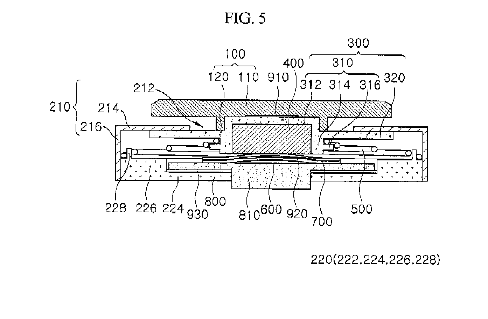

Referring to FIG. 5, a fixing part 316 protruding outward from the lower end 314 of the cap part 310 may be provided to prevent the hinge part 500 fixed to the lower end 314 of the cap part 314 from being separated. Also, a protrusion 228 protruding upward from the second plane 226 of the lower case 220 may be provided to prevent the outside of the hinge part 500 from being shaken by the movement of the manipulation member 300. Here, the fixing part 316 and the protrusion 228 may be provided on at least two areas or more. Also, the protrusion 228 may have a height equal to or less than that of each of the patterns of the hinge part 500 so that the movement of the manipulation member 300 is not interrupted by the protrusion 228.

The multi-direction input device in accordance with the exemplary embodiments may be applied to various electronic devices including a portable terminal. That is, the multi-direction input device may be applied to a mobile phone as well as various types of electronic devices such as a digital camera, a camcorder, an MP3 player, a PMP, a PDA, a GPS, a laptop computer, an electronic game machine, a remote controller, and an electronic dictionary. Such an electronic device includes a screen display unit for displaying an image. A point or cursor is displayed on the screen display unit. In the electronic device, the point or cursor on the screen display unit may be moved along an input signal applied through an input device. The multi-direction input device may be used as the input device. That is, a sensor output (a coordinate signal) of the multi-direction input device may be applied to a control unit, and then, the point or cursor on the screen display unit may be moved by the control unit.

However, the multi-direction input device capable of being used for the electronic devices is not limited to the above-described structure. For example, various sensors for moving the cursor on the screen and various devices for driving the sensors may be further added. For example, the movement of the manipulation member may be detected using an optical sensor to move the cursor on the screen.

In accordance with the exemplary embodiments, the manipulation member receiving at least one portion of the magnet part may be formed of the magnetic field blocking material having superior magnetic permeability to prevent the magnetic field of the magnet part from being emitted to the outside. Thus, the multi-direction input device may be thin in thickness and also errors of the credit cards due to the multi-direction input device may be prevented. Also, it may prevent external materials from being attracted into the multi-direction input device to prevent the errors of the multi-direction input device. Also, the material having elasticity may be spirally wound to surround the manipulation member without contacting the substrate to manufacture the hinge part. Thus, since the hinge part does not contact the substrate, it may prevent the hinge part and the substrate from being damaged. In addition, the manipulation member may be quickly restored by the elastic restoring force of the hinge part.

Also, the actuator disposed under the magnet part may be disposed on the dome switch to adhere using the Teflon tape, thereby fixing the actuator to the dome switch. Thus, even though the movement distance of the manipulation member is wide, the actuator may be disposed under the magnet part to easily click the dome switch using the actuator.

Although the multi-direction input device has been described with reference to the specific embodiments, it is not limited thereto. Therefore, it will be readily understood by those skilled in the art that various modifications and changes can be made thereto without departing from the spirit and scope of the present invention defined by the appended claims.

## Claims

1. A multi-direction input device comprising:
a magnet part;
a manipulation member configured to receive the magnet part, the manipulation member being moved in multi-directions by user's manipulation; and
a hinge part configured to surround at least one side of the manipulation member, the hinge part allowing the manipulation member to return to an original position by elasticity,
wherein at least one portion of the manipulation member is formed of a magnetic field blocking material.

2. The multi-direction input device of claim 1, wherein the manipulation member comprises:
a cap part disposed in an inner space of the manipulation member to receive the magnet part; and
a flat plate part extending outward from one area of the cap part.

3. The multi-direction input device of claim 2, wherein a button part is coupled to an upper end of the cap part above the flat plate part, and the hinge part is coupled to a lower end of the cap part under the flat plate part.

4. The multi-direction input device of claim 2, wherein, in the manipulation member, the cap part is formed of the magnetic field blocking material, the cap part and the flat plate part are formed of the magnetic field blocking material, or the magnetic field blocking material is disposed on the inside of the cap part contacting the magnet part.

5. The multi-direction input device of claim 4, wherein the magnetic field blocking material is formed of at least one of a metal, a ceramic, and a rubber which have magnetic permeability of approximately 200 or more.

6. The multi-direction input device of claim 3, further comprising a fixing part extending from the lower end of the cap toward the flat plate part to prevent the hinge part from being separated.

7. The multi-direction input device of claim 1, further comprising:
a case part comprising upper and lower cases coupled to each other to receive the hinge part and the manipulation member therein, and
a protrusion protruding upward from the outside of the lower case to fix the outside of the hinge part.

8. The multi-direction input device of claim 1, further comprising an actuator and a dome switch disposed under the magnet part,
wherein the actuator contacts a top surface of the dome switch to adhere to the dome switch through an adhesion unit.

9. The multi-direction input device of claim 8, wherein the adhesion unit comprises a Teflon tape configured to cover the actuator and the whole dome switch.
